# EUROPEAN PATENT APPLICATION

(11) **EP 2 285 162 A2**
(43) Date of publication of application: **16.02.2011**
(21) Application number: 10171916.9
(22) Date of filing: 04.08.2010
(51) Int. Cl.: H04W 48/08

(54) **Method for displaying network name in mobile terminal and system thereof**

(30) Priority: 10.08.2009 KR 20090073211
(71) Applicant: Samsung Electronics Co., Ltd., Suwon-si, Gyeonggi-Do (KR)
(72) Inventor: Kim, Hyo Jin, Gyeonggi-do (KR)
(74) Representative: Jenkins, Richard Gavin

(57) **Abstract**

A system and method for displaying a network name in a mobile terminal that can receive a message regarding a network name from a base station during a camp-on procedure of the portable terminal. The method for displaying a network name in a mobile terminal preferably includes receiving a specific message with a network name from a base station during a camp-on procedure; analyzing a field of the specific message to extract the network name; and displaying the extracted network name on an idle screen.

## Description

### CLAIM OF PRIORITY

This application claims priority from Korean Application No. 10-2009-0073211 filed August 10, 2009, the contents of which are incorporated by reference herein in their entirety.

### BACKGROUND OF THE INVENTION

### Field of the Invention

The present invention relates to a system and method for receiving messages by a mobile terminal. More particularly, the present invention relates to a system and method for receiving a message with a network name from a base station by a portable terminal during a camp-on procedure to display the network name on an idle screen.

### Description of the Related Art

In recent years, the use of portable terminals has become widespread in many countries, and mobile communication services providers have included various services according to communication protocols and requirements of a plurality of respective nations. Different communication protocols are often defined in each country. Accordingly, manufacturing companies of portable terminals need to comply with certain broadcasting requirements and communication protocols of each respective country. Accordingly, the manufacturing companies of portable terminals have complied with the respective communication protocols when designing and manufacturing the portable terminal or providing associated services.

For example, a number of countries have a regulation that a mobile communication network name is to be displayed on an idle screen. In order to comply with this regulation, the manufacturing companies of portable terminals have inputted a Public Land Mobile Network (PLMN) code with a plurality of service providers to be able to be used in a corresponding country upon manufacturing the portable terminals in order to display network names with respect to mobile communication enterprisers of a corresponding country.

Further, when the portable terminal is booted or performs handover, the portable terminal may receive a system information message broadcast from a base station during a camp-on procedure for setting a new base station. At this time, a PLMN code may be added to the system information message and the system information message be transmitted. Moreover, the portable terminal may receive a location updating accept message from a corresponding base station. Then, when the camp-on procedure is terminated, the portable terminal may use all services provided from the base station.

The portable terminal then checks whether or not the PLMN code received from the base station matches with a stored PLMN code. When there is a matched PLMN code, the portable terminal may display a corresponding network name on an idle screen.

After a particular portable terminal is developed or comes into the market, a PLMN code with respect to a new service provider (e.g. a new business providing communication services) is not stored in the portable terminal because the particular PLMN code either did not exist or was not known by the manufacturer of the particular portable terminal. Accordingly, when a PLMN code matching with the received PLMN code has not been stored in the portable terminal, the portable terminal may display the PLMN code received from a corresponding base station untouched (i.e. just display the code because there is no associated service provider in the storage of the portable terminal). The phenomenon occurs more often in those countries where mobile terminal services have just started to grow.

Accordingly, when the portable terminal displays a PLMN code instead of a corresponding network name on an idle screen, and a user may be dissatisfied at using the portable terminal because he/she cannot identify the service provider. However, in order to prevent such a problem, when a PLMN code and a network name with respect to an enterpriser starting business newly is updated in the portable terminal, cost consumption required in a development procedure of software is increased. Moreover, after development, since a consumer may bear the high cost to download a corresponding program, it increases a consumer's costs and takes up additional storage on the portable terminal.

### SUMMARY OF THE INVENTION

The present invention provides a method for displaying a network name in a portable terminal that may receive a message regarding a network name from a base station during a camp-on procedure of the portable terminal, and a system thereof.

The present invention further provides a method for displaying a network name in a portable terminal that may add a network name to a message transmitted and received during a camp-on procedure of the portable terminal and transmitting the message, and a system thereof.

The present invention further provides a method for displaying a network name in a portable terminal that may extract a network name included in a message received from a base station by the portable terminal and display the extracted network name on an idle screen, and a system thereof.

The present invention further provides a method for displaying a network name in a portable terminal that may analyze a message from a base station by the portable terminal, combine the extracted network name with a PLMN code, and update a network information table, and a system thereof.

In accordance with an exemplary aspect of the present invention, a method for displaying a network name in a portable terminal includes: receiving a specific message with a network name from a base station during a camp-on procedure; analyzing a field of the specific message to extract the network name; and displaying the extracted network name on an idle screen.

In accordance with another exemplary aspect of the present invention, a portable terminal in an apparatus for displaying a network name in the portable terminal preferably includes: a control unit receiving a location updating accept message from a base station during a camp-on procedure and analyzing a field of the location updating accept message to extract the network name; and a display unit for displaying the extracted network name on the idle screen.

In accordance with another exemplary aspect of the present invention, a system for displaying a network name in a portable terminal preferably includes: a base station adding a field to a location updating accept message during a camp-on procedure, setting a network name to the field, and transmitting the location updating accept message to the portable terminal; and the portable terminal analyzing the field to extract the network name, and displaying the extracted network name on an idle screen.

In an exemplary aspect of the present invention, a portable terminal receives a message with a network name from a base station during a camp-on procedure, and analyzes the message to extract the network name, thereby displaying a corresponding network name on an idle screen.

According to an exemplary aspect of the present invention, a portable terminal checks whether a Public Land Mobile Network (PLMN) code exists in a network information table that matches with a PLMN code corresponding to the extracted network name; and updates the network information table with the network name and the PLMN code when there is no matching PLMN code corresponding to the extracted network name in the network information table.

Further, a base station can transmit a message with a network name to a portable terminal during a camp-on procedure. In addition, a user can reduce consumption/maintenance costs to update network names with respect to new mobile communication service providers.

### BRIEF DESCRIPTION OF THE DRAWINGS

The exemplary objects, features and advantages of the present invention will become more apparent from the following detailed description in conjunction with the accompanying drawings, in which:
FIG. 1 is a view illustrating a configuration of a system for displaying a network name in a mobile terminal according to an exemplary embodiment of the present invention;
FIG. 2 is a block diagram illustrating a schematic configuration of a mobile terminal according to an exemplary embodiment of the present invention;
FIG. 3 is a schematic diagram illustrating data flow between a portable terminal and a base station according to an exemplary embodiment of the present invention;
FIG. 4 is a flow chart illustrating a method for transmitting data by a base station according to an exemplary embodiment of the present invention;
FIG. 5 is a view illustrating a structure of a PLMN code according to an exemplary embodiment of the present invention;
FIG. 6 is a view illustrating a structure of a location updating accept message according to an exemplary embodiment of the present invention;
FIG. 7 is a flow chart illustrating a procedure for analyzing a location updating accept message to extract network information according to an exemplary embodiment of the present invention;
FIGS. 8A and 8B are views illustrating a network information table according to an exemplary embodiment of the present invention, respectively; and
FIGS. 9A to 9C are views illustrating examples of a screen with respect to a procedure for displaying an extracted network name on a screen according to an exemplary embodiment of the present invention, respectively.

### DETAILED DESCRIPTION

Exemplary embodiments of the present invention will now be described herein in more detail with reference to the accompanying drawings. The same reference numbers are used throughout the drawings to refer to the same or like parts. Detailed descriptions of well-known functions and structures incorporated herein may be omitted to avoid obscuring appreciation of the subject matter of the present invention by a person of ordinary skill in the art.

As used herein, the term "message" refers to a communication capable of being received in a camp-on procedure when a portable terminal is booted or performs a handover. At this time, the message may become a location updating accept message for checking a location of a portable terminal, types of services that the portable terminal can support, a presence of robbery or loss, and a presence of a normal operation. Here, the location updating accept message can include a network name field with a network name with respect to a mobile communication enterpriser.

As used herein, the term "network name field" refers to a field added to the location updating accept message, and contains information regarding a mobile communication enterpriser. Namely, the network name field can be configured in a string form so that the network name selectively has a length from one to 50 octets. Meanwhile, a field of the location updating accept message including the network name is not limited to the added network name field. Namely, the network name field can be defined as another name to be used.

As used herein, the term "network information table" refers to a table including information about mobile communication enterprisers and is divided into a public land mobile network (PLMN) code and a network name to be used.

In this particular case, the PLMN code may be included in a system information message received during a camp-on procedure, and the network name may be included in a network name field of a location updating accept message in a string form. For example, the PLMN code may have codes such as '450', '300', and '556' as a country code, and codes such as '010', '123', '476', and '777' as a network code. Further, the network code may include matched network name information containing '010' being 'A Telecom', '123' being 'B Telecom', '476' being 'C Telecom', and '777' being 'D Telecom'. Moreover, the network information table can also be stored in a combination form of available network names and PLMN codes during manufacturing the portable terminal.

For convenience of a description, in the exemplary embodiments herein a terminal according to the present invention comprises a portable terminal. However, the presently claimed invention is not limited to a portable terminal. Namely, the portable terminal according to an exemplary embodiment of the present invention is a terminal that can receive a message during a camp-on procedure when a portable terminal is booted or performs a handover. In this exemplary case, the claimed invention is applicable to all kinds of information and communication devices and multi-media devices, such as mobile communication terminals with a communication function, mobile telephones, Personal Digital Assistant (PDA), Smart Phones, International Mobile Telecommunication 2000 (IMT-2000) terminals, Code Division Multiple Access (CDMA) terminals, Global System for Mobile communication (GSM) terminals, Wideband Code Division Multiple Access (WCDMA) terminals, High Speed Downlink Packet Access (HSDPA) terminals, World Interoperability for Microwave Access (Wimax) terminals, Universal Mobile Telecommunication Service (UMTS) terminals, and applications thereof.

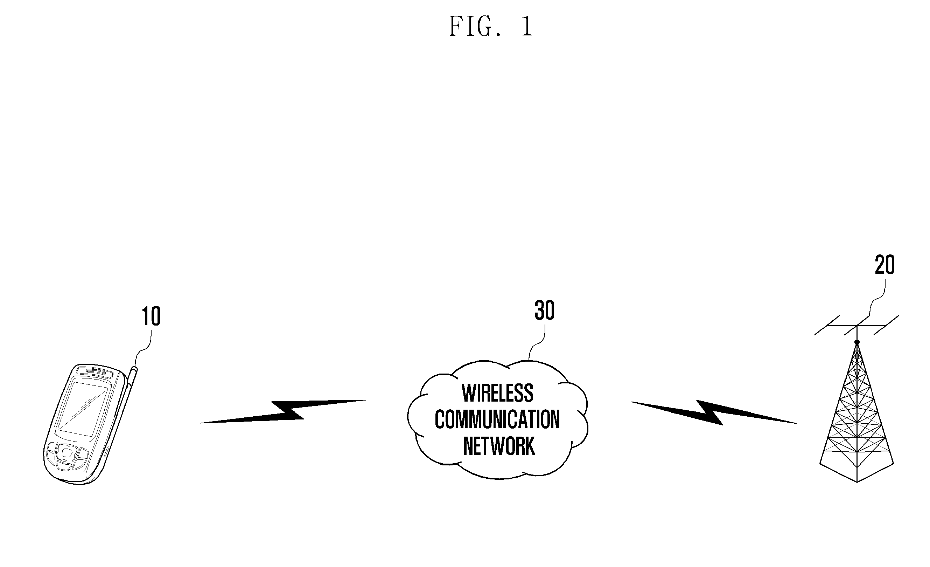

FIG. 1 is a view illustrating a configuration of a system for displaying a network name on a mobile terminal according to an exemplary embodiment of the present invention.

Referring now to FIG. 1, the system for displaying a network name of a corresponding base station on a mobile terminal according to an exemplary embodiment of the present invention may include a portable terminal 10, a base station 20, and a mobile communication network 30.

In the system having a structure as described above, the portable terminal 10 may receive a message including a network name from the base station 20 through the mobile communication network 30, and analyze the received message to extract a corresponding network name and in order to display the network name on an idle screen.

The base station 20 can transmit a system information message to the portable terminal 10 during a camp-on procedure of the portable terminal 10. In addition, the base station 20 may exchange a channel set message with the portable terminal 10. The base station 20 may also transmit a message capable of checking a location of a portable terminal, the types of services that the portable terminal can support, presence of robbery or loss, and presence of normal operation to the portable terminal 10. Here, the message may become a location updating accept message. At this time, the base station 20 can add a network name field capable of including information about a network name to the message. The network name may be added to the network name field in a string form to be constructed. Further, the network name field added to the message is preferably configured based on the 3rd Generation Partnership Project (3GPP) specification. A person of ordinary skill in the art also understands and appreciates that the presently claimed invention is also applicable to a 4^{th} generation (4G) specification of wireless communication protocols and any successors thereto.

With continued reference to FIG. 1, the portable terminal 10 may receive the system information message from the base station 20 during the camp-on procedure. Then, the portable terminal 10 may exchange a channel set message with the base station 20. Further, the portable terminal 10 may receive a message including information regarding network names from the base station 20. In addition, the message can become a location updating accept message. Upon reception of the message, the portable terminal 10 may analyze a network name field of the received message to extract the network name. In this case, the network name can be configured in a string form. Namely, the portable terminal 10 checks whether or not a network name exists in the location updating accept message. When the network name exists, the portable terminal 10 may extract a network name set in a string form from the network name field.

When the network name is extracted, the portable terminal 10 may check whether or not the extracted network name is stored in a network information table. At this time, the portable terminal 10 may update a PLMN code corresponding to a network name according to the checked result in the network information table. Namely, when a matched network name does not exist at the network information table, the portable terminal 10 can store the extracted network name and the PLMN code in the network information table. Subsequently, the portable terminal 10 may display the network name on an idle screen.

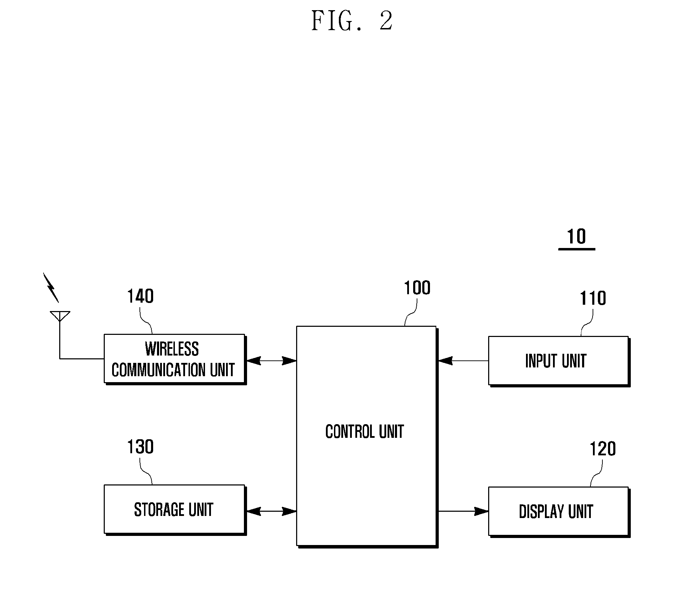

FIG. 2 is a block diagram illustrating a schematic configuration of a mobile terminal according to an exemplary embodiment of the present invention.

Referring now to FIG. 2, the portable terminal 10 according to an exemplary embodiment of the present invention includes an input unit 110, a display unit 120, a storage unit 130, a wireless communication unit 140, and a control unit 100.

The input unit 110 receives an input of numeric or character information, and includes a plurality of input keys and function keys for setting various functions. The function keys may include arrow keys, side-keys, and short-cut keys set to perform specific functions. Further, the input unit 110 transfers key signals input related to a user setting and function control of the portable terminal 10 to the control unit 100. Here, the input unit 110 generates an input signal according to a user gesture and may include at least one of a key pad and a touch pad to permit a user gesture as an input. In this case, the input unit 110 may be configured in one touch screen form together with the display unit 120 to simultaneously perform input and display functions. In particular, the input unit 110 according to an exemplary embodiment of the present invention may include a power key for booting the portable terminal 10 according to a user's request.

The display unit 120 may display image data output from the control unit 100, and user data and additional screens requested by a user. Here, the display unit 120 may comprise a liquid crystal display (LCD). The display unit 120 according to this exemplary embodiment of the present invention is not limited to an LCD. Namely, the display unit 120 is applicable to an organic light-emitting diode (OLED) and an application material with respect thereto. In addition, most any other type of thin-film technology display may also be used. Here, the display unit 120 may be configured in a touch screen form together with the input unit 110 to perform simultaneous input and display functions. In particular, the display unit 120 according to an exemplary embodiment of the present invention may display a network name included in the message received during the camp-on procedure on an idle screen.

Still referring to FIG. 2, the storage unit 130 may store an Operating System (OS) for booting of the portable terminal 10 and one or more respective application programs of the portable terminal 10, namely, application programs for executing a camp-on procedure. Further, user data produced according to a use of the portable terminal 10 can be stored in the storage unit 130. One to store application programs and an OS in the portable terminal can divide the storage unit 130 into a program area and a data area. The program area stores various kinds of application programs. Respective functions are provided using corresponding programs under the control of the control unit 100 according to a user's request. In particular, a program analyzing a message received from the base station 20 during the camp-on procedure to extract the network name, a program updating the extracted network name and a PLMN code in the network information table, and a program displaying the extracted network name on an idle screen can be stored in the program area according to an exemplary embodiment of the present invention.

For example, the data area executes a function storing various data, including but not limited to data generated during execution of the application programs, data input by a user, network names, and PLMN codes, etc. In particular, a network information table may be stored in the data area according to an exemplary embodiment of the present invention. In this case, the network information table is configured by combination data of the network names and the PLMN codes.

The wireless communication unit 140 performs transmission and reception of signals with respect to Short Message Service (SMS), Multimedia Message Service (MMS), voice call service, and data communication services. Furthermore, the wireless communication unit 150 converts and transmits voice/sound data and control data into wireless signals, and receives, converts, and outputs the wireless signals into voice/sound data and control data. The wireless communication unit 140 may include an RF transmitter for up converting a frequency of a transmitted signal and amplifying the signal, and an RF receiver for low-noise-amplifying a received signal and down converting the signal. In particular, the wireless communication unit 140 can perform data communication with the base station 20 during the camp-on procedure. Moreover, the wireless communication unit 140 may receive a system information message with the PLMN code and the message including a network name and from the base station 20, and then transfer the system information message with the PLMN code and the message including a network name and from the base station 20 to the control unit 100.

The control unit, which may comprise a microprocessor or special purpose processor 100, executes a function controlling an overall operation of the portable terminal 10 and signal flow between internal blocks of the portable terminal 10. In particular, the control unit 100 may carry out the camp-on procedure. At this time, the control unit 100 may receive the system information message including the PLMN code from the base station 20 during the Camp-on procedure. In addition, the control unit 100 may also transmit and receive a message for setting channels of the communication network with the base station 20.

The control unit 100 may transmit the location updating request message to the base station 20, and may receive the location updating accept message with information with respect to the network name from the base station 20. Namely, according to this exemplary embodiment, the control unit 100 may receive the location updating accept message and check a location of the portable terminal 10, the types of services that the portable terminal 10 can support, a presence of robbery or loss, and a presence of a normal operation. At this time, when the locating updating accept message is received, the portable terminal 10 may analyze a network name field of the received message to extract the network name. Namely, the control unit 100 checks whether or not the network name field is present in a field of the location updating accept message. When the network name field is present, the control unit 100 may extract the network name set in a string form from the network name field.

When the network name is extracted, the control unit 100 then checks whether or not the extracted network name is stored in a network information table. At this time, the control unit 100 checks whether or not a PLMN code matching with the PLMN code received through the system information message is stored in the network information table. Next, the control unit 100 may update the network name and the PLMN code in the network information table according the checked result. Then, the control unit 100 can control the extracted network name to be displayed on the idle screen.

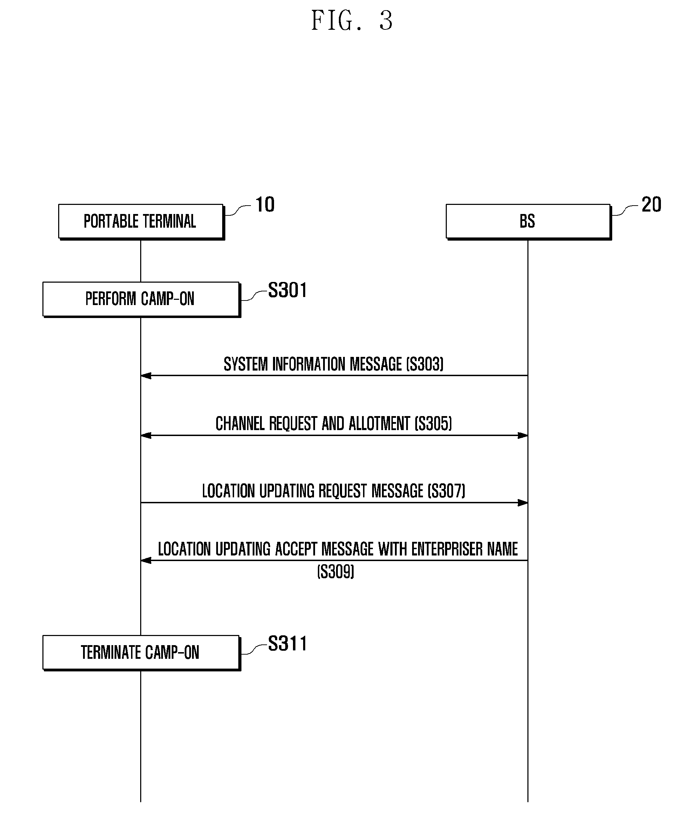

FIG. 3 is a schematic diagram illustrating data flow between a portable terminal and a base station according to an embodiment of the present invention.

Referring now to FIG. 3, at (S301) a portable terminal 10 may perform a camp-on procedure when it is booted or performs a handover according to a user's request. At this time, the camp-on procedure is to set a new base station at the time of booting the portable terminal 10 or when performing a handover.

At (S303), the portable terminal 10 receives a system information message from the base station 20. In this particular example, various information for setting a base station can be included in the system information message. For example, the system information message is transmitted to include a PLMN code capable of discriminating an enterpriser.

At (S305), the portable terminal 10 performs a procedure for channel request and allotment with the base station 20. Namely, the portable terminal 10 may request from the base station 20 a channelset, and receive an allotment of a channel from the base station 20.

At (S307), the portable terminal 10 may transmit a location updating request message. Namely, the portable terminal 10 may transmit the location updating request message for checking whether the portable terminal is at a location that may receive support of services, i.e., types of services that the portable terminal can support, presence of a robbery or loss, and a presence of normal operation to the base station 20. Next, at (S309), the portable terminal 10 may receive the location updating accept message. In this example, the location updating accept message includes network names. Herein, a network name set from the base station 20 can be included in a network name field of the location updating accept message.

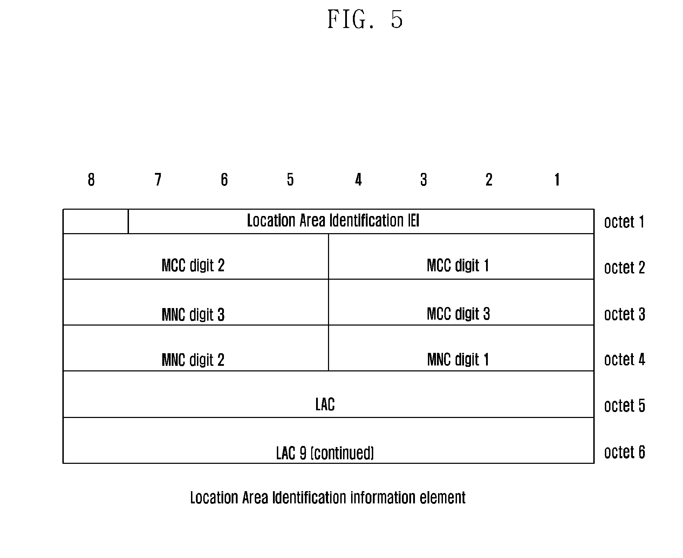

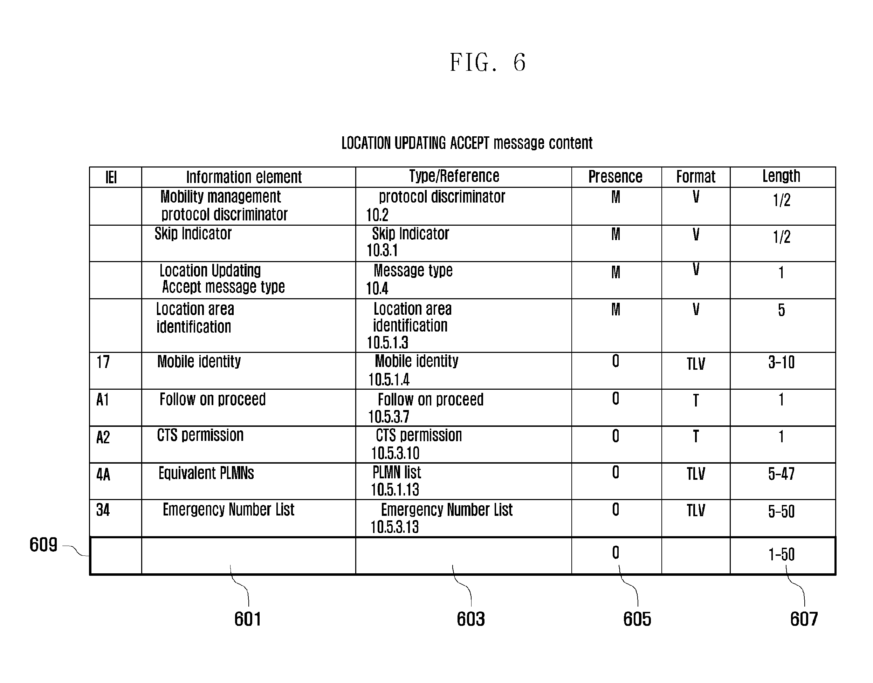

With continued reference to FIG. 3, at (S311) the portable terminal 10 may terminate the execution of the camp-on procedure. Namely, when the system information message, a channel set message, and the location updating accept message are received, the portable terminal 10 may use the various services provided from the base station 20. The system information message and the network name field of a message with a network name will be explained in detail with reference to FIG. 5 and FIG. 6 below.

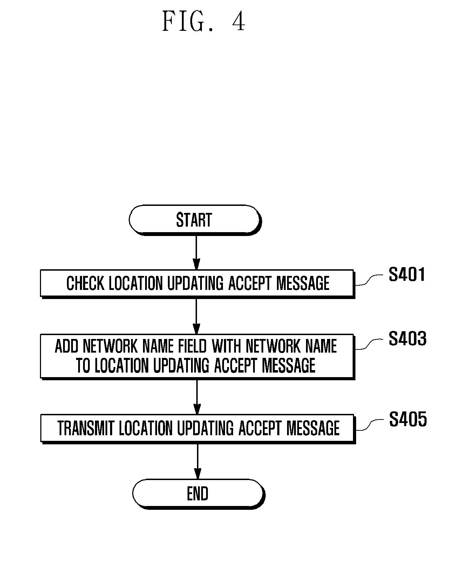

FIG. 4 is a flow chart illustrating a method for transmitting data by a base station according to an exemplary embodiment of the present invention, FIG. 5 is a view illustrating a structure of a PLMN code according to an exemplary embodiment of the present invention, and FIG. 6 is a view illustrating a structure of a location updating accept message according to an exemplary embodiment of the present invention.

Referring now to FIGS. 4 through 6, at (S401), the base station 20 may check a location updating accept message from the portable terminal 10 during a camp-on procedure. Here, the base station 20 may perform transmission of a system information message with a PLMN code, and request and allotment for setting channels. At this time, the foregoing procedures are preferably performed between the portable terminal 10 and the base station 20 before transmitting the location updating accept message. For example, as shown in FIG. 5, the base station may include the PLMN code in the system information message. Here, the PLMN code is Location Area Identification in 3GPP, and can be configured to include a Mobile Country Code (MCC), a Mobile Network Code (MNC), and a Location Area Code (LAC). In this case, the MCC presents a code with respect to a corresponding country in which the base station can be used. The MNC presents a code set to discriminate among mobile communication service providers.

When the message is requested, at (S403) the base station 20 adds a network name field to the location updating accept message to include a corresponding network name therein. Here, the network name can be included in the network name field of the location updating accept message in a string form. Namely, the network name field is a field that is added to a location updating accept message configured based on 3GPP specification.

For example, as shown in FIG. 6, a network name field 609 may have a structure to be added to the location updating accept message. In particular, an information element 601 with a name with respect to a field can be set in the network name field 609.

For example, 'Telecom name', 'Operator name', and the like can be set in the information element 601. Further, type/Reference 603 including types and references with respect to network names can be set. For example, 'B Telecom', 'D Telecom', and the like can be set in the type/Reference 603. Further, Presence 605 indicating the mandatory or option of a field can be set. For example, Mandatory M and Optional O can be set in the Presence 605. In this case, the Mandatory M is an element that should be included and the Optional O is an element that may be selectively included. Further, Length 607 indicating length information of a string included in a field can be set. In this case, the Length 607 can be set in a string form in a size from 1 octet to 50 octets in the network name field 609.

With continued reference to FIG. 4, at (S405), when the network name is added to the message, the base station 20 transmits the location updating accept message included in the network name to the portable terminal 10.

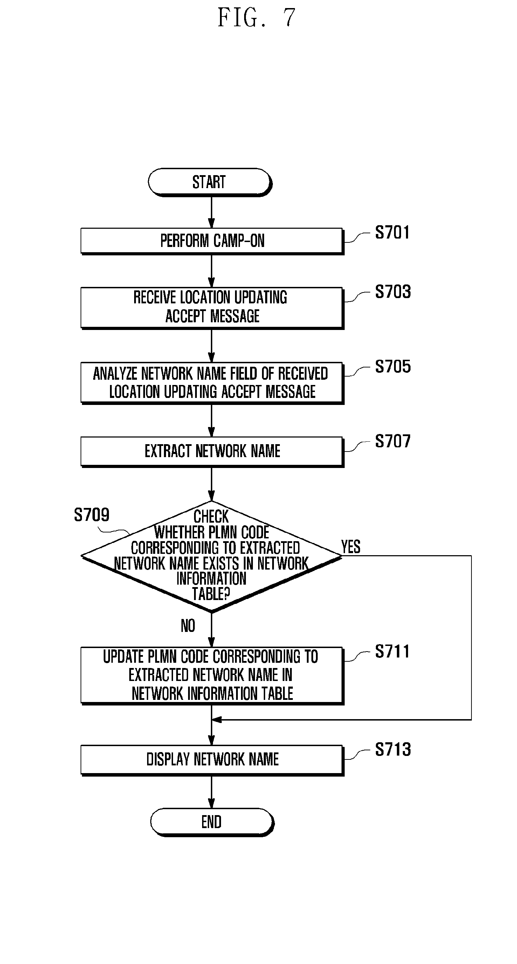

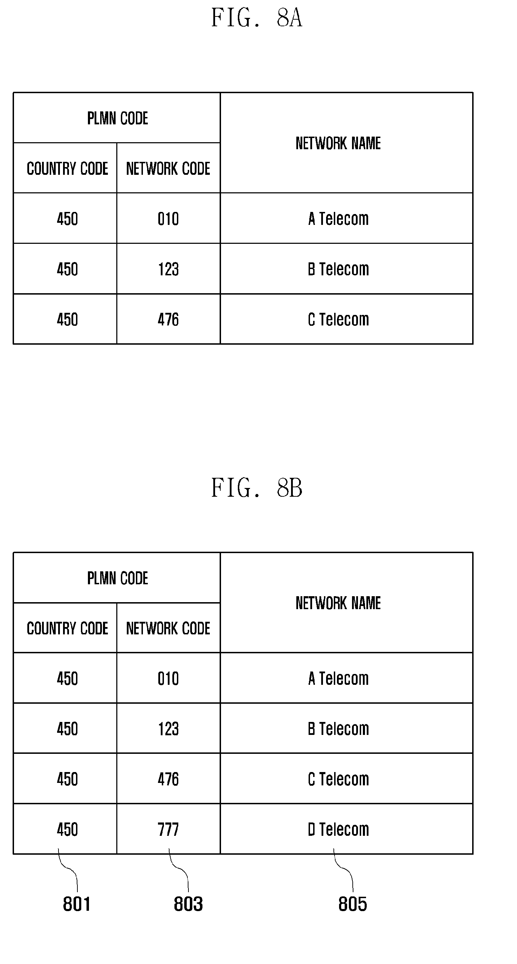

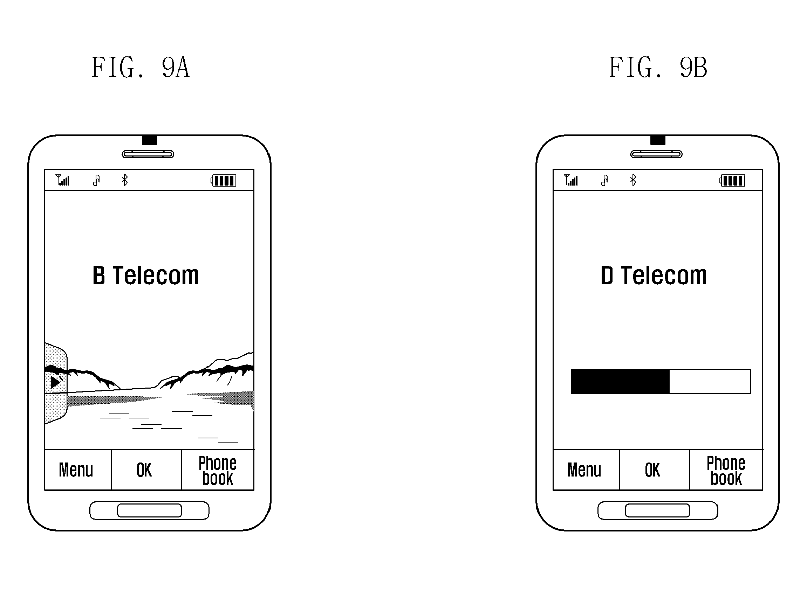

FIG. 7 is a flow chart illustrating a procedure for analyzing a location updating accept message to extract network information according to an embodiment of the present invention. FIGS. 8A and 8B are views illustrating a network information table according to an embodiment of the present invention, respectively. FIGS. 9A through 9C are views illustrating examples of a screen with respect to a procedure for displaying an extracted network name on a screen according to an exemplary embodiment of the present invention, respectively.

Referring now to FIGS. 7 to 9, at (S701) a control unit 100 performs a camp-on procedure to set a new base station when the portable terminal is booted or performs handover according to a user's request. At this time, the control unit 100 receives a PMLN code through a system information message during the camp-on procedure. Further, the control unit 100 exchanges a communication channel set message with the base station 20.

The control unit 100 may also transmit a location updating request message to the base station 20, and at (S703) receive a location updating accept message from the base station 20. Next, when the camp-on procedure is completed, the control unit 100 may execute a mobile communication service using the base station 20 and receive various information from the base station 20.

When the message is received, at (S705) the control unit 100 may analyze a network name field of the received message. Then, at (S707) the control unit 100 may extract the network name through a procedure analyzing the network name field.

In this case, the control unit 100 checks whether or not the network name field exists in the field of the location updating accept message. When the network name field exists, the control unit 100 may extract a network name set in a string form from the network name field. At this time, the network name may become a unique name of an enterpriser corresponding to the base station 20. There can are 'A Telecom', 'B Telecom', 'C Telecom', 'D Telecom', and the like as examples of the network name. Hereinafter, it is assumed that a network name extracted according to an exemplary embodiment of the present invention is 'D Telecom' for convenience of a description.

When the network name is extracted, at (S709), the control unit 100 checks whether or not there exists a network name extracted from a network information table.

In this case, the control unit 100 may check whether a PLMN code corresponding to 'D Telecom' being an extracted network name exists in a network information table. Here, the PLMN code is a code matching with a network name, which is received through the system information message during a camp-on procedure. In detail, in the checked result that a network name matching with the extracted network name is stored in the network information table, when a plurality of PLMN codes are set to one network name, it is not easy for the control unit 100 to extract and to check an exact network name. Thus, the control unit 100 may compare the received PLMN code with a PLMN code stored in the network information table. For example, as shown in FIG. 8A, combination data of a PLMN code and a network name can be stored in the network information table. In this example, the PLMN code contains a country code and a network code. At this time, the control unit 100 may check whether or not a PLMN code corresponding to 'D Telecom' being a network name extracted from the location updating accept message is stored in the network information table.

When a PLMN code matching with the PLMN code included in the received message does not exist in the network information table, at (S711) the control unit 100 may update the extracted network name and a corresponding PLMN code in the network information table. Here, the PLMN code can be acquired through the system information message. For example, as shown in FIG. 8B, the control unit 100 may update and store '450'(801) being a country code, '777'(803) being a network code, 'D Telecom'(805) being a network name of a PLMN code as new base station information in the network information table.

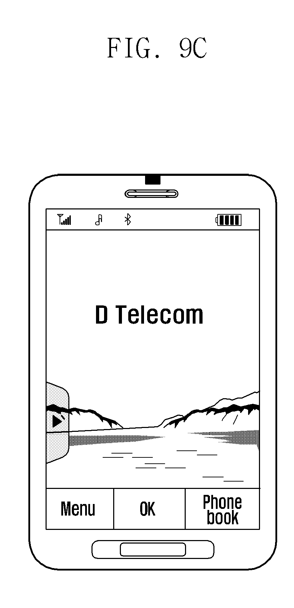

When the network information table is updated, at (S713) the control unit 100 may display a corresponding network name on an idle screen. Meanwhile, when the PLMN code included in the received message is stored in the network information table, the control unit 100 may display a corresponding network name on the idle screen. For example, as shown in FIG. 9A, the control unit 100 may display 'B Telecom' being a network name corresponding to a current base station on an idle screen. At this time, when booting is executed, as shown in FIG. 9B, the control unit 100 may display 'D Telecom' being a network name with respect to a new base station on a loading screen. Further, when a handover is advanced, as shown in FIG. 9C, the control unit 100 may display 'D Telecom' being a network name with respect to a new base station on an idle screen.

The above-described methods according to the present invention can be realized in hardware or as software or computer code that can be stored in a recording medium such as, for example, a CD ROM, a DVD, a RAM, thumbnail drive, a floppy disk, a flash storage, a hard disk, or a magneto-optical disk or downloaded over a network, so that the methods described herein can be executed by such software using a general purpose computer, or a special processor, microprocessor or in programmable or dedicated hardware, such as an ASIC or FPGA. As would be understood in the art, the computer, the processor or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein.

Although exemplary embodiments of the present invention have been described in detail hereinabove, it should be clearly understood that many variations and modifications of the basic inventive concepts herein taught which may appear to those skilled in the present art will still fall within the spirit and scope of the present invention, as defined in the appended claims.

## Claims

1. A method for displaying a network name in a portable terminal, comprising:
receiving from a base station a specific message with a network name;
analyzing a field of the specific message to extract the network name; and
displaying the extracted network name on an idle screen.

2. The method according to claim 1, wherein the portable terminal receives the specific message from the base station during a camp-on procedure.

3. The method of claim 1, wherein the specific message comprises a location updating accept message.

4. The method of claim 1, wherein the base station adds the network name field to the location updating accept message to include a corresponding network name therein.

5. The method of claim 1, wherein extracting the network name comprises:
checking whether a network name field is included in the specific message;
extracting the network name set in a string form from the network name field when the network name field is included in the specific message.

6. The method of claim 5, wherein the network name field is added to the specific message by the base station such that the network name is set to the name field.

7. The method of claim 1, further comprising:
checking whether a Public Land Mobile Network (PLMN) code exists in a network information table that matches with a PLMN code corresponding to the extracted network name; and
updating the network information table with the network name and the PLMN code when there is no matching PLMN code corresponding to the extracted network name in the network information table.

8. A portable terminal in an apparatus for displaying a network name in the portable terminal, comprising:
a control unit receiving a location updating accept message and analyzing a field of the location updating accept message to extract a network name; and
a display unit for displaying the extracted network name on the idle screen.

9. The portable terminal of claim 8, wherein the control unit receives the location updating accept message from a base station during a camp-on procedure.

10. The portable terminal of claim 8, wherein the control unit checks whether a network name field is included in the location updating accept message and extracts the network name set in the network name field in a string form.

11. The portable terminal of claim 8, wherein the control unit checks whether a matching Public Land Mobile Network (PLMN) code corresponding to the extracted network name exists in a network information table; and wherein the control unit updates the network and the network information table when there is no matching PLMN code corresponding to the extracted network name in the network information table.

12. A system for displaying a network name in a portable terminal, comprising:
a base station adding a field to a location updating accept message during a camp-on procedure, setting a network name to the field, and transmitting the location updating accept message to the portable terminal; and
the portable terminal analyzing the field to extract the network name, and displaying the extracted network name on an idle screen.

13. The system of claim 12, wherein the base station adds a network name field to the location updating accept message and sets the network name to the network name field in a string form.

14. The system of claim 12, wherein the portable terminal checks whether a network name field exists in the location updating accept message to extract the network name set in a string form.

15. The system of claim 12, wherein the portable terminal checks whether a matching Public Land Mobile Network (PLMN) code corresponding to the extracted network name exists in a network information table; and wherein the portable terminal updates the network name and the PLMN code corresponding to the extracted network name in the network information table when there is no matching PLMN code corresponding to the extracted network name in the network information table.
